# EUROPEAN PATENT APPLICATION

(11) **EP 0 971 174 A2**
(43) Date of publication of application: **12.01.2000**
(21) Application number: 99304593.9
(22) Date of filing: 14.06.1999
(51) Int. Cl.: F24C 7/08, H05B 6/68

(54) **Kitchen appliance**

(30) Priority: 18.06.1998 GB 9813191; 04.09.1998 GB 9819316
(71) Applicant: NCR INTERNATIONAL INC., Dayton, Ohio 45479 (US)
(72) Inventor: Emmott, Stephen J., London SE1 9JL (GB); Woods, Sarah, London SW1W 8QR (GB)
(74) Representative: Cleary, Fidelma

(57) **Abstract**

A kitchen appliance, such as a microwave oven (10), includes a microphone (30) for generating signals in response to speech from a user of the appliance, and speech recognition means (12) for deriving digital data from the microphone signals. This digital data is used to control operation of the appliance or to identify items processed by the appliance.

## Description

The present invention relates to a data management and communication system including a kitchen appliance, such as one to which consumable items are to be introduced.

It is the object of the invention to provide a kitchen appliance operation of which is carried out in a user-friendly and effective manner, and which may be used as part of a data management and communication system.

According to one aspect of the present invention there is provided a kitchen appliance, characterized by a microphone for generating signals in response to speech from a user of the kitchen appliance, and speech recognition means for deriving digital data from the microphone signals, said digital data being utilised in connection with the use of the kitchen appliance.

The invention exhibits ease and convenience of use particularly insofar as the invention is incorporated into any standard kitchen appliances that are required for handling consumable items. Since it is likely that such kitchen appliances are arranged to be provided at the most appropriate location within the kitchen environment for handling consumable items, it follows that the interactive management of item replacement can likewise be readily controlled from such location.

Preferably, the remote management system serves to manage the collection and delivery of items required to replace the items chosen by the user for consumption.

Advantageously, the transfer means is arranged to transfer payment instructions relating to the replacement of the items chosen for consumption.

Further, the transfer means can be arranged to record the said data serving to identify each said item over a predetermined time period prior to transfer to the remote management system. Efficient use can then be made of the data transfer medium.

The transfer means can be arranged to provide for the transfer of item-related data from a remote site to the apparatus. Appropriate information related to, for example, the cooking of the item can then be readily down-loaded, and accessed from, for example, the Internet.

A particularly important aspect of the invention is the novel integration of multiple technologies to create an entirely new appliance that features additional functionality of mass consumer appeal not found in existing appliances.

Advantageously, the kitchen appliance comprises an appliance for processing consumable items. In particular, the appliance may comprise an oven, for example a microwave oven.

The invention is described further hereinafter, by way of example only, with reference to the accompanying drawings in which:
Fig. 1a is a schematic plan view of a microwave oven embodying the present invention;
Fig. 1b is a schematic plan view of the door of the microwave of Fig. 1a; and
Fig. 2 is a block diagram of a complete management system employing apparatus embodying the present invention.

As will be appreciated from the following, the present invention can advantageously provide for simple and secure access to the Internet so as to conduct electronic banking or electronic shopping without necessarily requiring connection by means of a dedicated modem or telephone connection and in which the apparatus can readily execute its primary consumable-item-handling function, for example cooking a food product, whilst advantageously allowing for easy and convenient re-ordering of any required food product handled by the apparatus. The apparatus can also be adapted so as to provide further functionality that can prove appropriate or otherwise desirous and relevant to the location of the apparatus within a domestic environment, for example such as the reception and display of a television broadcast.

Turning now to Fig. la there is shown a schematic plan view of a microwave oven adapted so as to provide for the advantages of the present invention. A microwave oven represents a now quite common domestic appliance which is arranged for handling, i.e. cooking, consumable items such as pre-prepared meals and is also an appliance that has particularly advantageous dimensions for use in accordance with the present invention.

The microwave oven 10 illustrated, comprises a data handling region 12 located at the rear of the oven, a common central oven region 14 for receiving the consumable food the rear ofthe oven, a common central oven region 14 for receiving the consumable food product to be cooked and a forwardly facing user interface region 16 formed within the microwave door and comprising a touch screen for both the input, and the display, of appropriate information.

The data handling portion 12 comprises a central processing unit 18 connected to a video board 20 and a sound board 22 and also connected to a SCSI interface 24 and, if required, an aerial 26, or other appropriate signal input, for receiving a television broadcast signal. The aforementioned elements of the data handling portion 12 are advantageously arranged not only to provide the required control and operation of standard microwave functions but also the control and handling of data arising in relation to the commercial activity, for example retail activity, that generally arises by necessity through use of the oven 10.

The oven 10 is arranged to receive operating power by means of a mains supply unit 28 which, in accordance with a particularly advantageous aspect of the present invention, also provides for a communication channel for access to the Internet so as to achieve the desired electronic banking and/or electronic shopping service. It will of course be appreciated that the Internet access for the data handling portion 12 of the microwave oven 10 can alternatively be achieved by means of a dedicated modem and telephone line. However, since the domestic appliances commonly to be used in association with the present invention will in any case be connected to a mains supply, it is considered that by far the most advantageous means of achieving connection to the Internet is therefore via the mains supply of the appliance such as the oven 10.

The front ofthe oven 10 is also provided with data input means 30 for entering data identifying the food items being handled, i.e. cooked by the oven 10. In accordance with the present invention, the data input means 30 includes a microphone forming part of a speech-input arrangement which, in combination with speech recognition software loaded into the data handling portion 12 of the oven 10, is used for the input of data identifying the food items processed by the oven 10, and also for the input of commands which describe actions to be taken by the oven. As is well known, the speech recognition software causes the data handling portion 12 to derive digital data from signals generated by the microphone. In addition, the speech-input arrangement can be used for the generation of email messages to be transferred to the Internet through the same connection as the item-identification data. The item identification data and command execution can therefore readily be enhanced by additional message data created by the user of the apparatus.

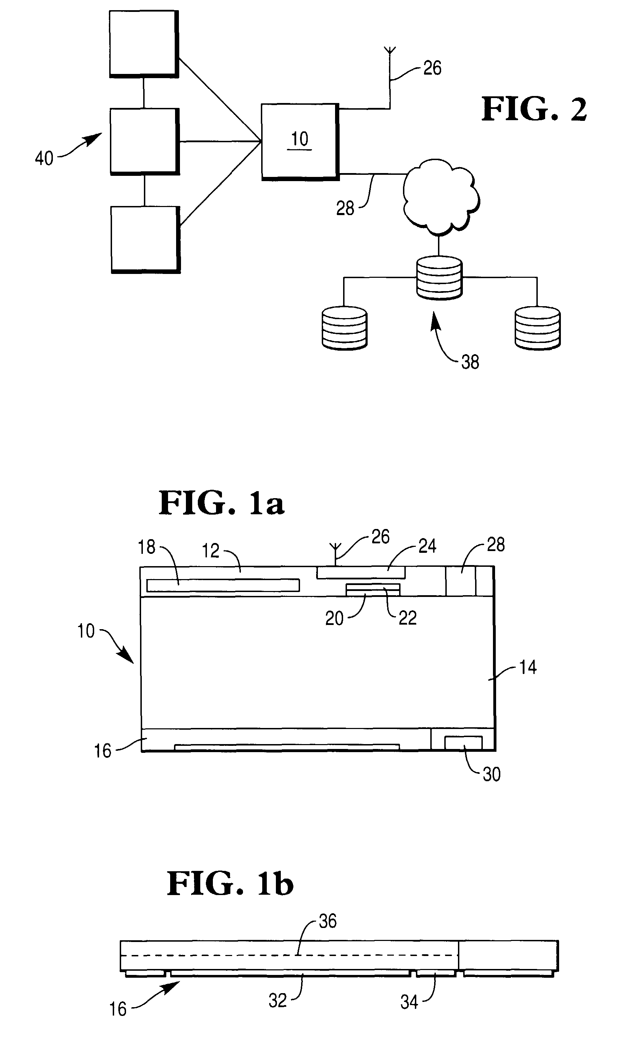

Fig. 1b shows in greater detail the general construction of the user interface of the oven 10 which, as is common for such domestic appliances, comprises the door of the oven. According to the particular embodiment ofthe present invention incorporated into a microwave oven, the door effectively not only provides for sealable access into the oven 14 but also comprises the complete user interface 16 for operation of the appliance both as an oven 10 and for controlling any required data transfer via the Internet connection. In the illustrated embodiment, the door includes a liquid crystal display touch screen 32 which is mounted within the plastic mount 34 and which is protected from the radiation generated within the microwave oven 14 by means of a standard electro-magnetic radiation protective screen 36 which extends in a plane parallel to the touch screen 32.

The information displayed on the touch screen 32 is controlled by means of the elements within the data handling portion 12 and can advantageously provide a user interface not only for the general cooking functions of the oven 10 but also for the control and management of the Internet access achieved by means of the oven 10 embodying the present invention. Any text input that might be required in relation to the use of the oven 10 in accordance with the present invention can likewise be readily input by means of the touch screen display 32.

It will therefore be appreciated that the touch screen 32 provides a common interface by which the user of the apparatus can select, access and interact with a television broadcast, the Internet and the general cooking function of the oven 10. Advantageously, the interface is arranged as a graphical user interface and provided with an icon-based tool bar so as to allow for ease of access and choice of the appropriate functionality afforded by Internet tools such as standard web browsers and so as to achieve quick and ready access to commercial functions commonly arising in association with electronic banking or electronic shopping activities.

As a further additional aspect of the present invention, the Internet connection achieved through the oven 10 can advantageously enhance the interactive aspects of the oven in that information having particular relevance to the mode operation of the appliance can readily be down-loaded from any appropriate site on the Internet and used as required by the consumer. For example, recipes relevant to the particular food product identified by use of a bar code scanner, or other appropriate input means, of the invention can readily be down-loaded and displayed on the screen mounted in the door of the oven 10. Further, general advice relating to the cooking of such products or dietary information such as the calorific and fat content of such food stuffs can likewise be down-loaded for ready display upon the screen mounted on the door of the oven for ready access by the consumer.

A typical scenario in which the advantages of the present invention are best illustrated follows.

A food product to be cooked in the oven 10 is chosen by the consumer from its domestic store and, generally before cooking the product, the choice of that product is recorded by the aforementioned input means such as the bar code reader 30. The bar code reader serves to identify the particular product being handled, i.e. cooked by the oven 10 and this information is then employed in generating an appropriate re-ordering of that product. In accordance with any particular function or requirement, the information identifying a variety of food products cooked during the course of a predetermined period, for example one week or one day, can readily be stored within the data handling region 12 of the oven 10 and then transmitted via the Internet access achieved by means of the power supply 28 to the remotely located management system which serves to complete the ordering, and collection, of the replacement food product items from a remote storage location, and then arrange for delivery of the replacement items to the consumer. As an additional aspect, payment for the replacement items can likewise be achieved by means of the Internet connection. As an alternative however, it should be appreciated that data identifying each particular consumable item selected for cooking within the oven 10 can be transferred by the communication channel provided by the power supply 28 as and when each product is identified and the information then collected and collated at the remote item-replacement management system.

As an alternative to a communication channel provided by a power supply, a modem and telephone, or any other means of data communication, can be provided.

In any case, as and when a selection of consumable items are consumed through use of the domestic appliance, a record that the stock of such items has been depleted is made readily available via the Internet connection of the appliance to an appropriate stock/warehouse location so that replacement of the item can readily be initiated. Of course, should a consumer not require replacement of a particular item then the selection by the consumer of the item need not be recorded by the bar code reader.

Turning now to Fig. 2, there is shown a block diagram of a complete arrangement in which an appliance embodying the present invention is employed. The microwave oven 10 of Fig. 1 is illustrated which, in this embodiment, acts as a server to a local area network (LAN) 40 provided in the home and including nodes comprising other domestic appliances commonly found in the home. Connection to the Internet is by means of the power supply 28 and this allows for access to remote locations, such as banking or retail locations 38 which, in accordance with a particularly advantageous aspect of the present invention, can include a network-connected database or data warehouse arranged not only for the provision of relevant information to the consumer but also to allow for an appropriate inventory/ordering system such as that provided by means of on-line analytical processing (OLAP) or on-line transaction processing (OLTP) systems for effecting the re-ordering of the items consumed in accordance with the standard use of the appliance.

It will of course be appreciated that the invention is not restricted to the details of the foregoing embodiment. For example, the relevant appliance need not necessarily be a microwave oven but could, for example, be some other domestic appliance such as a fridge and/or freezer in which consumable items are at least temporarily housed and through use of which a consumer can readily record the identification of a product requiring replenishment: such information then being readily transferred to the appropriate replenishment-management system.

The present invention offers particular advantages in that the domestic appliance concerned is generally incorporated into a specific domestic environment and the invention advantageously extends the functionality of such known appliances. Also, the invention is much more user friendly than current apparatus allowing for Internet access and it can readily provide a user interface that allows for ease of reading and therefore interaction within the environment within which the appliance is commonly used.

## Claims

1. A kitchen appliance (10), characterized by a microphone (30) for generating signals in response to speech from a user of the kitchen appliance, and speech recognition means (12) for deriving digital data from the microphone signals, said digital data being utilised in connection with the use of the kitchen appliance.

2. An appliance according to claim 1, characterized in that said digital data identifies items processed by the appliance (10).

3. An appliance according to claim 2, characterized by storage means (12) for storing said digital signals, to thereby generate a list of items processed.

4. An appliance according to claim 3, characterized in that said digital data identifying processed items is arranged to be transferred to a remote management system.

5. An appliance according to claim 4, characterized in that said remote management system is arranged to procure replacements for food items processed.

6. An appliance according to any one of the preceding claims, characterized in that said speech recognition means (12) is arranged to issue commands to said appliance, based on received speech which contains commands which describe actions to be taken by said appliance (10).
